# FASCICULE DE BREVET EUROPEEN

(11) **EP 3 703 091 B1**
(45) Date de publication et mention de la délivrance du brevet: **11.05.2022**
(21) Numéro de dépôt: 20159245.8
(22) Date de dépôt: 25.02.2020
(51) Int. Cl.: H01H 33/46, B60L 3/00, B60L 5/00, H01H 33/666

(54) **DISPOSITIF DE COMMUTATION ÉLECTRIQUE POUR VÉHICULE FERROVIAIRE ET VÉHICULE FERROVIAIRE COMPORTANT UN TEL DISPOSITIF**
ELEKTRISCHE SCHALTVORRICHTUNG FÜR SCHIENENFAHRZEUG, UND MIT DIESER VORRICHTUNG AUSGESTATTETES SCHIENENFAHRZEUG
ELECTRICAL SWITCHING DEVICE FOR A RAILWAY VEHICLE AND RAILWAY VEHICLE EQUIPPED WITH SUCH A DEVICE

(30) Priorité: 27.02.2019 FR 1902017
(43) Date de publication de la demande: 02.09.2020
(73) Titulaire: ALSTOM Transport Technologies, 93400 Saint-Ouen (FR)
(72) Inventeur: QUENTIN, Nicolas, 65420 IBOS (FR); DUFFAU, Laurent, 65360 ARCIZAC-ADOUR (FR); GAVID, Aurel, 65500 VIC EN BIGORRE (FR)
(74) Mandataire: Lavoix

(56) Documents cités:
- EP-A1- 2 340 958
- EP-A1- 3 301 699
- CN-U- 202 134 840
- CN-Y- 200 972 997
- Sécheron: "Multi-functional Main AC Switch for rolling stock Type MACS", , 2016, pages 1-8, XP055634139, Geneva, CH Extrait de l'Internet: URL:https://imtram.com/wp-content/uploads/ Secheron-Brochure-MACS.pdf [extrait le 2019-10-21]
- Schneider Electric: "Square D(TM) Brand Type VR Medium Voltage Vacuum Circuit Breaker", , 2014, pages 1-6, XP055634262, Extrait de l'Internet: URL:https://download.schneider-electric.co m/files?p_enDocType=Data+Bulletin&p_File_N ame=6055DB1401.pdf&p_Doc_Ref=6055DB1401 [extrait le 2019-10-21]

## Description

L'invention concerne un dispositif de commutation électrique pour véhicule ferroviaire, ainsi qu'un véhicule ferroviaire comportant un tel dispositif.

L'invention s'intéresse plus spécifiquement aux dispositifs de commutation qui comportent au moins deux modules, dont un premier module avec un disjoncteur monté sur un support et un deuxième module avec un composant électrique monté sur un autre support et qui est propre à être associé au disjoncteur. Le composant électrique du deuxième module peut notamment être choisi parmi un sectionneur de mise à terre ou un parafoudre.

Un tel dispositif permet de traiter le courant électrique fourni à un véhicule ferroviaire dans des conditions de sécurité tant en opérations normales que pendant les opérations de maintenance. Au cours de ces opérations de maintenance, le dispositif de commutation électrique doit être démonté et sorti du véhicule ferroviaire pour remplacer les pièces éventuellement défectueuses ou en limite d'usure.

Il est connu de GB-A-2 175 449 de réaliser un dispositif de commutation électrique modulaire, comportant un premier caisson, dans lequel est monté un disjoncteur à vide, et un deuxième caisson renfermant d'autres composants électriques, notamment de sectionnement. Le deuxième caisson est fixé au premier caisson au moyen de vis ou de boulons. Cette structure par caissons ne permet pas un accès aisé au disjoncteur ou aux autres composants électriques lors des opérations de maintenance, et demande en outre de démonter les différents caissons en cas de remplacement d'un des composants électriques ou du disjoncteur.

EP-3 301 699-A1 décrit un dispositif de commutation d'une installation au sol, dans lequel des disjoncteurs sont montés sur un premier support, qui est mobile grâce à des moyens de guidage. Les disjoncteurs sont électriquement connectés à d'autres composants électriques lorsque le premier support mobile est dans une configuration assemblée. Le premier support doit être déplacé entièrement pour pouvoir déconnecter les disjoncteurs des autres composants électriques. Cette opération de déconnexion, qui doit être effectuée par exemple lors des visites d'inspection ou de maintenance, est une opération relativement lourde à effectuer, consommatrice de temps. Le support mobile présente, en outre, une structure encombrante.

La société Sécheron décrit, dans une brochure commerciale de 2016, un dispositif de commutation électrique embarqué dans un véhicule ferroviaire et vendu sous la référence MACS - pour *Main AC Switch* -. Un tel dispositif de commutation comprend un disjoncteur et un composant électrique associé au disjoncteur, qui sont montés sur une même plaque, la plaque étant fixée sur un toit du véhicule ou reçue dans un caisson haute tension.

C'est à ces problèmes qu'entend plus particulièrement remédier l'invention, en proposant un nouveau dispositif de commutation électrique pour véhicule ferroviaire, dont la maintenance est facilitée.

À cet effet, l'invention a pour objet un dispositif de commutation électrique pour véhicule ferroviaire, tel que défini à la revendication 1.

L'invention a également pour objet un véhicule ferroviaire, tel que défini à la revendication 12.

Grâce à l'invention, le dispositif de commutation électrique présente une structure modulaire qui permet un transport, un montage et un démontage aisés des premier module et deuxième module. Le véhicule ferroviaire offre une maintenance facilitée du dispositif de commutation électrique.

Des aspects avantageux mais non obligatoires de l'invention sont spécifiés aux autres revendications.

L'invention sera mieux comprise et d'autres avantages de celle-ci apparaîtront plus clairement à la lumière de la description qui va suivre, de deux modes de réalisation d'un dispositif de commutation électrique pour véhicule ferroviaire et d'un véhicule ferroviaire comportant un dispositif de commutation électrique conformes au principe de l'invention. La description est donnée uniquement à titre d'exemple et est faite en référence aux dessins, dans lesquels :
[Fig 1] la figure 1 est un schéma d'un véhicule ferroviaire conforme à l'invention ;
[Fig 2] la figure 2 est une vue en perspective d'un dispositif de commutation électrique conforme à un premier mode de réalisation de l'invention, dans une configuration désassemblée ;
[Fig 3] la figure 3 est une vue similaire à la figure 2, illustrant un autre état de la configuration désassemblée ;
[Fig 4] la figure 4 est une vue en perspective du détail III de la figure 3 ;
[Fig 5] la figure 5 est une vue en perspective similaire à la figure 2, montrant une configuration assemblée ;
[Fig 6] la figure 6 est une vue similaire à la figure 5, illustrant un autre état de la configuration assemblée ;
[Fig 7] la figure 7 est une vue similaire à la figure 4, illustrant une variante du dispositif de commutation, et
[Fig 8] la figure 8 est une vue similaire à la figure 3, d'un dispositif de commutation électrique conforme à un deuxième mode de réalisation de l'invention.

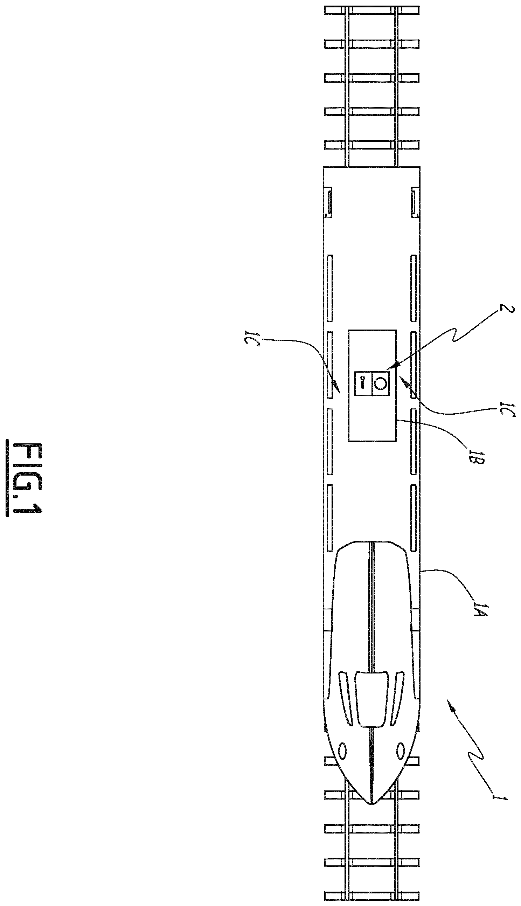

Sur la figure 1 est représenté un véhicule ferroviaire 1. Le véhicule ferroviaire 1 comporte une caisse externe 1A prévue pour rouler sur des rails d'un réseau ferroviaire. La forme de réalisation de la caisse externe 1A n'est pas limitative.

Le véhicule ferroviaire 1 comporte également un caisson haute tension 1B qui est agencé et fixé à l'intérieur de la caisse externe 1A. Le caisson haute tension 1B est prévu pour recevoir divers équipements électriques et électromécaniques, notamment aux fins de l'alimentation électrique et de la traction du véhicule ferroviaire. Le véhicule ferroviaire 1 comporte aussi un ou plusieurs couloirs 1C. Sur la figure 1, deux tels couloirs latéraux sont ainsi montrés. Chacun des couloirs 1C est disposé à l'intérieur de la caisse externe 1A, en étant agencé entre la paroi externe latérale de cette dernière et le caisson haute tension 1B dans le cas d'un couloir latéral, ou entre deux caissons internes dans le cas d'un couloir central. Chaque couloir 1C permet à un opérateur, tel qu'un agent de maintenance, d'accéder au caisson haute tension 1B depuis l'intérieur de la caisse externe 1A. Là encore, la forme de réalisation du ou des couloirs 1C n'est pas limitative.

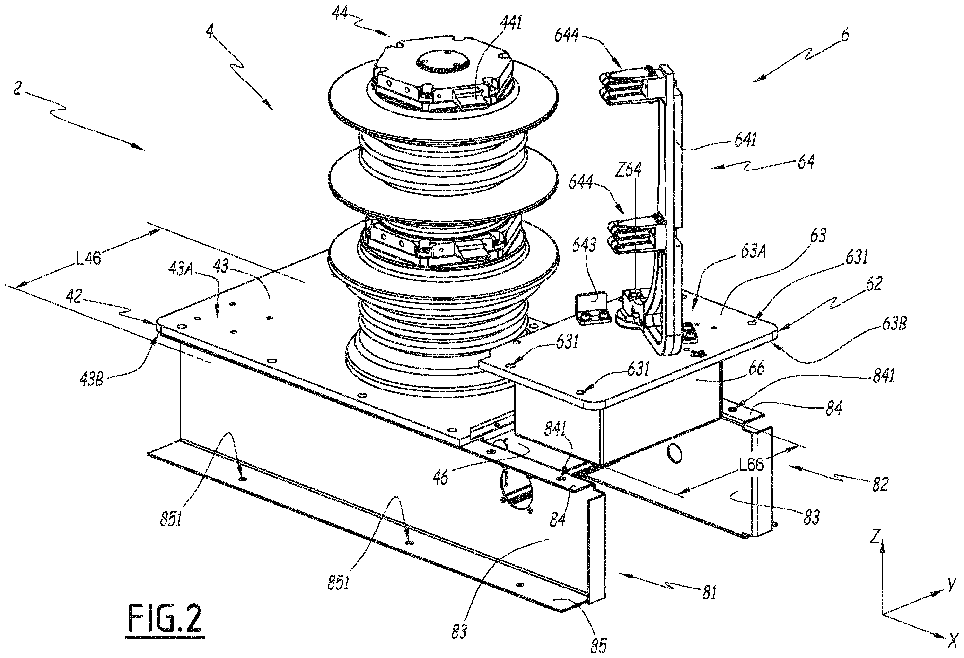

Le véhicule ferroviaire 1 comporte également un dispositif de commutation électrique 2, qui n'est représenté que de manière schématique sur la figure 1 et qui est représenté en détail sur les figures 2 à 6. Par commodité, la suite de la description est faite en référence à un repère orthonormé, qui est constitué d'axes X, Y et Z et qui est indiqué sur les figures 2 à 6. En pratique, ce repère orthonormé est lié fixement à la caisse externe 1A.

Le dispositif de commutation électrique 2 est logé dans le caisson haute tension 1B du véhicule 1. Autrement dit, le dispositif de commutation 2 est dit « embarqué » dans le véhicule ferroviaire 1. L'espace disponible au sein du caisson 1B étant réduit, en particulier en comparaison avec une installation stationnaire telle qu'un poste de transformation électrique en bordure d'une voie ferrée, le dispositif de commutation 2 présente une structure compacte et modulaire, afin de pourvoir être aisément déplacé dans les couloirs 1C par un opérateur lors d'opérations de maintenance, comme expliqué plus loin.

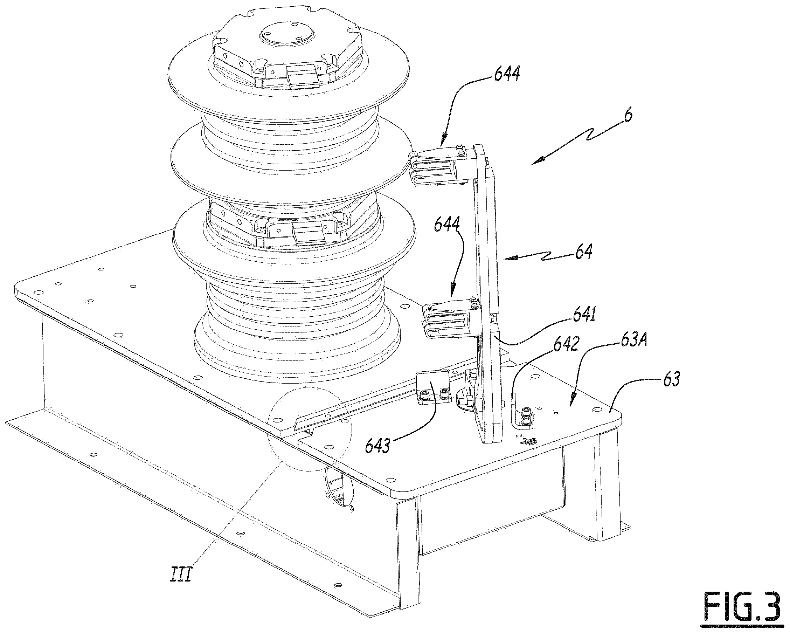

Le dispositif de commutation électrique 2 comporte un premier module 4. Comme bien visible sur les figures 2 et 3, le module 4 comporte un support 42 qui inclut, voire consiste en une plaque 43. La plaque 43 est rigide, en étant notamment métallique. En service, c'est-à-dire lors de la mise en oeuvre normale du dispositif de commutation 2, la plaque 43 s'étend globalement dans un plan géométrique qui est orthogonal à l'axe Z. Ainsi, la plaque 43 présente deux faces principales, à savoir une face 43A et une face 43B, qui sont opposées l'une à l'autre suivant l'axe Z. Ces faces 43A et 43B sont de préférence planes et sont usinées de façon à accueillir les divers éléments nécessaires à la fixation et au fonctionnement du dispositif de commutation 2.

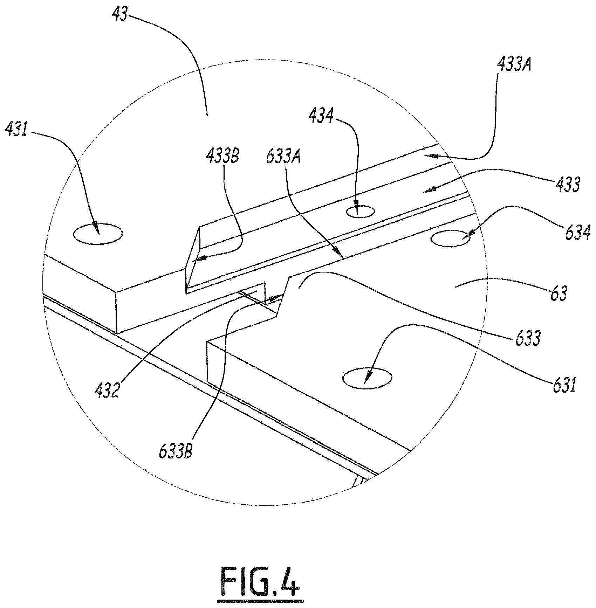

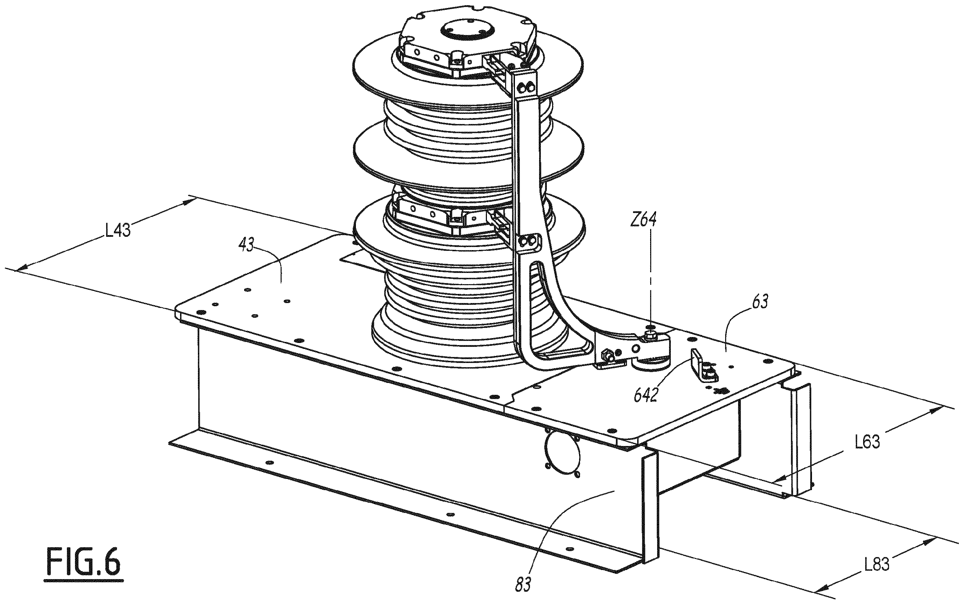

La plaque 43 inclut deux bordures latérales qui sont opposées l'une à l'autre selon l'axe Y. Sur la figure 6, on note L43 la dimension de la plaque 43, selon l'axe Y, séparant l'une de l'autre les deux bordures latérales. Chacune de ces bordures latérales est pourvue de trous traversants 431, chacun de ces trous 431 reliant l'une à l'autre les faces 43A et 43B. Dans l'exemple de réalisation considéré sur les figures, les trous 431 sont répartis de manière sensiblement régulière le long de chacune des bordures latérales. De plus, chacune des bordures latérales est pourvue, sur la face 43B de la plaque 43, d'un rebord 432, plus particulièrement visible sur la figure 4.

De plus, la plaque 43 inclut deux bordures frontales qui sont opposées l'une à l'autre suivant l'axe X. Comme bien visible sur les figures 2 à 4, l'une de ces bordures frontales est pourvue d'un logement 433 qui présente un fond 433A s'étendant transversalement à l'axe X. Le logement 433 présente également des faces latérales 433B, qui sont opposées l'une à l'autre selon l'axe Y et qui s'étendent depuis le fond 433A de manière convergente l'une vers l'autre en direction de la bordure frontale opposée. Ainsi, le débouché du logement 433 s'étend, selon l'axe Y, sur une plus grande étendue que le fond 433A du logement 433. Le logement 433 est pourvu de trous 434 qui débouchent au moins sur la face 43A de la plaque 43.

Le module 4 comporte également un disjoncteur 44, par exemple un disjoncteur à vide. Comme bien visible sur les figures 2 et 3, le disjoncteur 44 est monté fixement sur la face 43A de la plaque 43. Le disjoncteur 44 est pourvu de couteaux 441 correspondant à des contacts électriques.

Le module 4 comporte en outre un organe de commande 46 qui est disposé sur la face 43B de la plaque 43. Cet organe de commande 46 est conçu pour commander le disjoncteur 44 de manière connue en soi. Quelle que soit sa forme de réalisation, l'organe de commande 46 présente une dimension suivant l'axe Y qui est notée L46 sur la figure 2.

Le dispositif de commutation 2 comporte en outre un deuxième module 6. Comme bien visible sur les figures 2 et 3, le deuxième module 6 comporte un support 62 qui inclut, voire consiste en une plaque 63. La plaque 63 est rigide, en étant par exemple métallique. En service, c'est-à-dire lors de la mise en oeuvre normale du dispositif de commutation 2, la plaque 63 s'étend globalement dans un plan géométrique qui est orthogonal à l'axe Z. Ainsi, la plaque 63 présente deux faces principales, à savoir une face 63A et une face 63B, qui sont opposées l'une à l'autre suivant l'axe Z. Ces faces 63A et 63B sont de préférence planes et sont usinées de façon à accueillir les divers éléments nécessaires à la fixation et au fonctionnement du dispositif de commutation 2.

La plaque 63 inclut deux bordures latérales qui sont opposées l'une à l'autre selon l'axe Y. Sur les figure 2 et figure 6, on note L63 la dimension de la plaque 63, selon l'axe Y, séparant l'une de l'autre les deux bordures latérales.

Chacune de ces bordures latérales est pourvue de trous traversants 631, chacun de ces trous 631 reliant l'une à l'autre les faces 63A et 63B. Dans l'exemple de réalisation considéré sur les figures, les trous 631 sont répartis de manière sensiblement régulière le long de chacune des bordures latérales. De plus, chacune des bordures latérales est pourvue, sur la face 63B de la plaque 63, d'un rebord qui n'est pas visible sur les figures mais qui est similaire au rebord 432 pour la plaque 43.

La plaque 63 inclut deux bordures frontales qui sont opposées l'une à l'autre suivant l'axe X. Comme bien visible sur les figures 2 à 4, l'une de ces bordures frontales est pourvue d'une protubérance 633 qui présente un sommet 633A s'étendant transversalement à l'axe X. La protubérance 633 présente également des faces latérales 633B, qui sont opposées l'une à l'autre selon l'axe Y et qui s'étendent depuis le sommet 633A de manière divergente l'une de l'autre en direction de la bordure frontale opposée. La protubérance 633 présente ainsi dans le plan défini par les axes X et Y un profil trapézoïdal dont la base est sur l'une des bordures frontales et dont le sommet 633A s'étend dans la direction opposée à la bordure frontale opposée, le sommet 633A étant ici parallèle à la bordure frontale, les faces latérales 633B étant les côtés du trapèze. La dimension de la protubérance 633 mesurée selon l'axe Y décroît à mesure qu'on se rapproche, selon l'axe X, du sommet 633A depuis le reste de la protubérance 633.

La protubérance 633 est pourvue de trous 634 qui traversent la plaque 43.

Le deuxième module 6 comporte en outre un composant électrique 64, par exemple un sectionneur de mise à terre, représenté dans les figures 2, 3, 5 et 6.

Ce composant électrique 64 comporte un bras 641, qui est monté sur la face 63A de la plaque 63 de manière pivotante autour d'un axe Z64 s'étendant selon l'axe Z. Cet axe Z64 est orthogonal à la face 63A de la plaque 63. Le bras 641 peut ainsi tourner à la surface de la plaque 63 autour de l'axe Z64.

Le deuxième module 6 comporte aussi deux butées 642 et 643 qui sont disposées sur la face 63A de la plaque 63 de façon à limiter l'amplitude du mouvement de rotation du bras 641 autour de l'axe Z64. Dans l'exemple de réalisation considéré sur les figures, ces butées sont réalisées sous forme de pattes métalliques en forme de L.

Le bras 641 du composant électrique 64 est pourvu de pinces de contact électrique 644.

Le deuxième module 6 comporte en outre un organe de commande 66 qui est disposé sur la face 63B de la plaque 63. Cet organe de commande 66 est conçu pour commander le composant électrique 64 de manière connue en soi, en particulier pour commander le pivotement du bras 641 autour de l'axe Z64. Quelle que soit sa forme de réalisation, l'organe de commande 66 présente une dimension suivant l'axe Y qui est notée L66 sur la figure 2.

Le dispositif de commutation 2 comporte également des rails 81 et 82. Chacun de ces rails 81 et 82 inclut une paroi 83 qui, en service, s'étend perpendiculairement à l'axe Y. Cette paroi 83 présente, sur l'un de ses deux côtés opposés l'un à l'autre selon l'axe Z, un rebord 84, qui s'étend perpendiculairement à l'axe Z et qui court le long de la paroi 83 selon l'axe X. Ce rebord 84 est pourvu de trous traversants 841. La paroi 83 est en outre pourvue, sur son côté opposé au rebord 84, d'un rebord 85, qui s'étend perpendiculairement à l'axe Z et qui court le long de la paroi 83 selon l'axe X. Les rebords 84 et 85 sont par exemple orientés dans le même sens par rapport à la paroi 83. Le rebord 85 est pourvu de trous traversants 851. Les deux rails 81 et 82 peuvent être individuellement identiques l'un à l'autre. On note L83 la distance selon l'axe Y entre les parois respectives 83 des rails 81 et 82.

Ainsi que représenté schématiquement en figure 1, le dispositif de commutation électrique 2 est installé dans le caisson haute tension 1B du véhicule ferroviaire 1. Le dispositif de commutation 2 est fixé au caisson haute tension 1B par l'intermédiaire des rails 81 et 82, des vis ou des écrous pénétrant dans les trous traversants 851 du rebord 85 des rails 81 et 82 pour s'ancrer au caisson 1B. La fixation des rails 81 et 82 au caisson haute tension 1B peut évidemment prendre d'autres formes de réalisation.

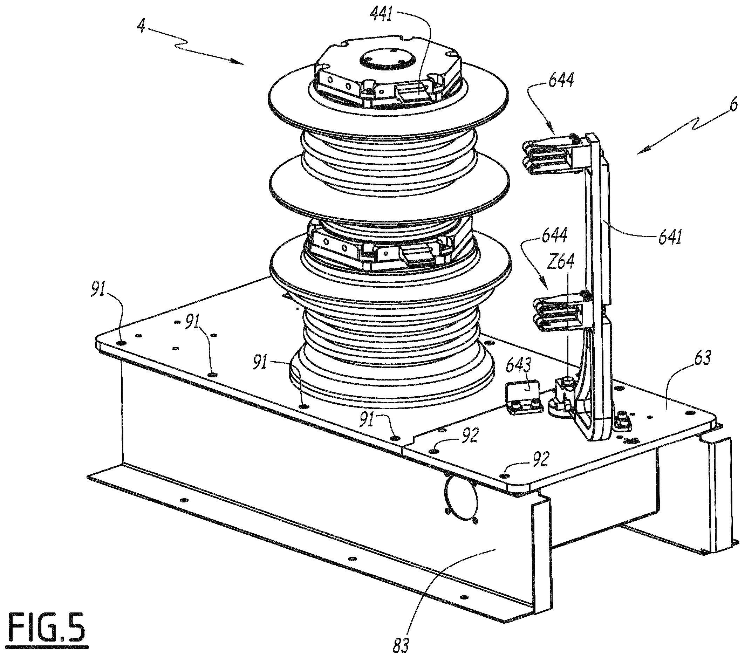

Les rails 81 et 82 permettent de guider l'un par rapport à l'autre les supports 42 et 62 des modules 4 et 6 entre une configuration désassemblée, illustrée par les figures 2 à 4, et une configuration assemblée montrée sur les figures 5 et 6. Ces deux configurations vont maintenant être décrites plus en détail.

Dans les figures 2 et 3, le premier module 4 est engagé sur les rails 81 et 82. Par « engagé », on entend que le support 42 est au contact des rails 81 et 82. Plus précisément, la face 43B de la plaque 43 repose sur le rebord 84 des rails 81 et 82, en formant entre eux un contact qui est ici une surface plane selon les axes X et Y. En pratique, la dimension L43 de la plaque 43 est prévue supérieure à la distance L83 entre les rails. Selon un aspect avantageux, la distance, selon l'axe Y, séparant les rebords 432 est égale ou légèrement inférieure à la distance L83 entre les parois respectives 83 des rails 81 et 82, de sorte que les rebords 432 coopèrent par ajustement, à des jeux près, avec la paroi 83 pour bloquer les mouvements relatifs de la plaque 43 par rapport aux rails 81 et 82 selon l'axe Y. En résultat, le premier module 4, lorsqu'il est engagé sur les rails 81 et 82, ne peut être déplacé que selon une translation d'axe X.

L'organe de commande 46 du premier module 4 se retrouve entre les parois 83 des rails 81 et 82, sans nécessairement les toucher, dès lors que la dimension L46 est inférieure à la distance L83.

Sur les figures 2 et 3, le support 62 du deuxième module 6 n'est pas en contact avec le support 42 du premier module 4. Sur la figure 3, le module 6 est engagé sur les rails 81 et 82, c'est-à-dire que le support 62 du deuxième module est en contact avec les rails 81 et 82. Sur la figure 2, le module 6 est désengagé des rails 81 et 82, c'est-à-dire qu'il n'y a plus de contact entre le support 62 et les rails 81 et 82. Dans la situation de la figure 3, le module 6 est désengageable, c'est-à-dire qu'il peut passer d'une position engagée sur les rails 81 et 82 à une position désengagée des rails 81 et 82, par exemple en s'éloignant de ces derniers par un mouvement ayant une composante selon l'axe Z.

Les figures 2 et 3 illustrent donc deux situations de la configuration désassemblée, la première sur la figure 2 dans laquelle le premier module 4 est engagé et le deuxième module 6 n'est pas engagé sur les rails, et la seconde sur la figure 3 dans laquelle le premier module 4 comme le deuxième module 6 sont tous deux engagés sur les rails 81 et 82, mais sans aucun contact entre leur support respectif 42 et 62.

Le composant électrique 64 et le disjoncteur 44 sont positionnés du même côté lorsque les supports 42 et 62 sont engagés sur les moyens de guidage, que ce soit en configuration désassemblée comme en configuration assemblée. De même, l'organe de commande 46 et l'organe de commande 66 se retrouvent du même côté lorsque les supports 42 et 62 sont engagés sur les moyens de guidage 81 et 82.

Lorsque le deuxième module 6 est engagé sur les rails 81 et 82, l'organe de commande 66 se retrouve entre les parois 83 des rails 81 et 82. À cet effet, la dimension L66 est inférieure à la distance L83. La face 63B de la plaque 63 est en appui sur le rebord 84 des rails 81 et 82, la dimension L63 de la plaque 63 étant prévue supérieure à la distance L83. Par ailleurs, suivant des considérations similaires à celles relatives aux rebords 432 pour la plaque 43, les rebords similaires prévus sur la face 63B de la plaque 63 sont avantageusement dimensionnés pour opérer par ajustement, à des jeux près, avec les parois 83 pour bloquer les mouvements relatifs de la plaque 63 par rapport aux rails 81 et 82 selon l'axe Y. En résultat, lorsque le deuxième module 6 est engagé sur les rails 81 et 82, les déplacements sont limités à une translation selon la direction X.

La figure 3 représente ainsi les premier module 4 et deuxième module 6 dans la configuration désassemblée, alors que les premier module 4 et deuxième module 6 sont engagés sur les rails 81 et 82. Les premier module 4 et deuxième module 6 peuvent alors être déplacés en translation selon l'axe X en se rapprochant l'un de l'autre, jusqu'à ce qu'un contact mécanique entre le support 42 du premier module 4 et le support 62 du deuxième module 6 soit établi. On se retrouve alors dans la situation représentée en figure 5, illustrant la configuration assemblée. Dans cette configuration assemblée, les trous traversants 431 et les trous traversants 841 sont alignés. Il est alors possible d'immobiliser le premier module 4 sur les rails 81 et 82 avec des moyens de fixation 91, par exemple à l'aide de vis ou de boulons ou de tout autre élément de fixation techniquement admissible. Sur les figures 5 et 6, ces moyens de fixation 91 sont indiqués uniquement de manière schématique. De préférence, ces moyens de fixation seront réversibles, c'est-à-dire que les premier module 4 ou deuxième module 6 pourront être déplacés en translation sur les rails 81 et 82 pour retourner à une configuration désassemblée, puis désengagés des rails afin de les remplacer lors d'opérations de maintenance. De même, dans la configuration assemblée, les trous traversants 631 et les trous traversants 841 sont eux aussi alignés, permettant de fixer le support 62 du deuxième module 6 aux rails 81 et 82 avec des moyens de fixation 92, de préférence réversibles et similaires aux moyens de fixation 91.

Lorsque le premier module 4 et le deuxième module 6 sont rapprochés par translation pour passer de la configuration désassemblée à la configuration assemblée, les faces latérales des plaques 43 et 63, situées en regard l'une de l'autre selon l'axe X, se rapprochent, jusqu'à rentrer en contact physique. Dans la configuration assemblée représentée en figure 5 et figure 6, la protubérance 633 de la plaque 63 est insérée dans le logement 433 de la plaque 43. Cette insertion de la protubérance 633 dans le logement 433 est réversible, en éloignant le support 42 du support 62 selon une translation d'axe X.

Les faces latérales 433B du logement 433 et les faces latérales 633B de la protubérance 633 ont chacune une normale contenue dans le plan défini par les axes X et Y, ces normales étant différentes l'une de l'autre et différentes des axes X et Y. En résultat, lorsque les faces latérales 433B et 633B sont en contact dans la configuration assemblée, le positionnement relatif des plaques 63 et 43 est déterminé dans le plan défini par les axes X et Y. Ce positionnement est précis, tant du point de vue positionnement spatial que positionnement angulaire. Par positionnement spatial, on entend le positionnement relatif dans le plan comprenant les axes X et Y, et par positionnement angulaire on entend le positionnement en rotation autour de l'axe Z. Ainsi, on comprend que la protubérance 633 et le logement 433 forment ensemble des moyens d'assemblage réversibles qui permettent d'assembler les supports 42 et 62 l'un à l'autre de manière réversible dans la configuration assemblée. Bien entendu, ces moyens d'assemblage peuvent prendre d'autres formes de réalisation que celle illustrée aux figures 2 à 6. L'utilisation combinée de la protubérance 633 et du logement 433 ayant des formes complémentaires est particulièrement recommandée. Ces formes complémentaires peuvent en particulier être un couple d'élément mâle et d'élément femelle, l'élément mâle pénétrant dans l'élément femelle lorsque les premier et deuxième supports 62 et 42 passent de la configuration désassemblée à la configuration assemblée.

Le trou 434 situé dans le logement 433 et le trou traversant 634 situé dans la protubérance 633 se retrouvent alignés lorsque les premier et deuxième supports 42 et 62 sont en configuration assemblée. Cela permet l'utilisation d'un moyen de sécurisation de la position relative des supports 42 et 62, par exemple une goupille élastique ou de tout autre moyen d'immobilisation réversible, par exemple tant que les moyens de fixation 91 et 92 ne sont pas mis en place.

Il est ainsi avantageux que les moyens d'assemblage soient un couple d'éléments mâle et femelle traversés par un trou apte à accueillir un moyen de sécurisation : le positionnement fin obtenu grâce aux moyens d'assemblage réversible sera maintenu jusqu'à l'application des moyens de fixation.

De plus, en configuration assemblée, les faces 43A du premier support 42 et 63A du deuxième support 62 sont affleurantes. Par « affleurantes », on entend que les faces 43A du premier support 42 et 63A du deuxième support 62 sont globalement parallèles et situées dans un même plan géométrique.

Comme montré sur la figure 6 dans laquelle les supports 42 et 62 sont en configuration assemblée, les pinces de contact électrique 644 portées par le bras 641 assurent une connexion électrique avec les couteaux 441 du disjoncteur 44. Le composant électrique 64 du deuxième module 6 est ici un sectionneur de mise à la terre. En variante ce composant électrique 64 peut être complété ou remplacé par un autre composant électrique non représenté ici, tel un parafoudre, ou tout autre composant propre à être associé au disjoncteur 44.

Plus généralement, le composant électrique 64 est prévu pour être connecté électriquement au disjoncteur 44, cette connexion étant opérée lorsque les supports 42 et 62 sont dans la configuration assemblée du fait que, dans cette configuration assemblée, les supports 42 et 62 font que le disjoncteur 44 et le composant 64 sont propres à être connectés l'un à l'autre, notamment en occupant un positionnement relatif de connexion, c'est-à-dire un positionnement relatif permettant leur connexion par mise en contact électrique. Lorsque les premier module 4 et deuxième module 6 sont dans la configuration assemblée, les différents contacts électriques nécessaires au bon fonctionnement du dispositif de commutation électrique 2 sont facilement accessibles, pour garantir, lors des opérations de maintenance, une connexion ou une déconnexion des contacts électriques facilitées.

En particulier, certaines opérations de branchement ou de débranchement électrique peuvent être semi-automatiques. Par semi-automatique, on entend qu'un opérateur n'a pas à intervenir physiquement à l'intérieur du caisson haute tension 1B dans lequel est placé le dispositif de commutation électrique 2 pour effectuer une de ces opérations de branchement ou de débranchement entre le disjoncteur 44 et le composant électrique 64, mais peut effectuer une de ces opérations en envoyant un signal à l'un et/ou l'autre des organes de commande 46 et 66. Par exemple, sur la figure 5, le bras 641 du composant électrique 64 est dans une première position en appui contre la butée 642, tandis que sur la figure 6, le bras 641 est dans une seconde position en appui contre la butée 643 et les pinces de contact électrique 644 du bras 641 sont enfichées sur les couteaux 441 du disjoncteur 44 : le contact électrique établi entre les couteaux 441 et les pinces de contact électrique 644 est réalisé par pivotement du bras 641 autour de l'axe Z64, ce pivotement étant commandé par l'organe de commande 66. Cet exemple de connexion électrique semi-automatique n'est pas limitatif, et d'autres connexions spécifiques à la nature effective du composant électrique 64 sont envisageables.

Les couteaux 441 du disjoncteur 44 et les pinces de contact électrique 644 du composant électrique 64 décrits ici sont des exemples non limitatifs d'organes de connexion, choisis pour garantir un bon contact électrique et une robustesse mécanique élevée, et sont de préférence constitués d'éléments de connexion électrique mâle-femelle.

De même, certaines opérations de connexions électriques entre le disjoncteur 44 et le composant électrique 64, voire entre le disjoncteur 44 ou le composant électrique 64 et un autre composant (non représenté) externe au dispositif de commutation, peuvent être effectuées manuellement, avant ou après les branchements ou débranchements semi-automatiques. Ces connexions électriques manuelles se font par exemple à l'aide de brides ou de colliers, fixés par des vis ou des écrous. Cette liste d'exemple de moyens de connexions électriques manuelles n'est pas limitative.

Le dispositif de commutation électrique 2 se trouve dans la configuration assemblée lorsque le véhicule ferroviaire 1 est en conditions normales d'exploitation, les premier et deuxième modules 4 et 6 étant alors immobilisés par les moyens de fixation 91 et 92. Lors des opérations de maintenance, un opérateur peut, sans intervenir physiquement dans le caisson haute tension 1B, actionner les moyens de branchement ou débranchement électriques semi-automatiques requis par l'intermédiaire des organes de commande 46 ou 66, par exemple pour la mise à la terre du dispositif de commutation 2, puis intervenir directement dans le caisson haute tension 1B pour effectuer d'éventuelles opérations manuelles de branchement ou débranchement électriques, et enfin défaire les moyens de fixation réversibles 91 ou 92 d'au moins un des premier et deuxième modules 4 et 6, défaire les moyens de sécurisation passant par les trous 434 et 634 s'ils sont présents, éloigner l'un de l'autre les premier et deuxième modules 4 et 6 par les moyens de guidage pour que le dispositif de commutation électrique 2 passe en configuration désassemblée.

Chacun des premier et deuxième modules 4 et 6 est alors dégageable des rails 81 et 82, et peut être effectivement désengagé des rails 81 et 82 indépendamment de l'autre module, c'est-à-dire tout en en laissant l'autre module engagé sur les rails 81 et 82. Le module désengagé, bien moins encombrant et lourd que le dispositif de commutation 2 entier, peut être sorti du caisson haute tension 1B, déplacé dans le couloir 1C et extrait de la caisse du véhicule ferroviaire 1 par les ouvertures existantes pour les opérateurs, sans devoir utiliser de moyens de manutention encombrants demandant d'aménager un accès particulier au travers de la paroi latérale, voire au travers du toit de la caisse externe 1A du véhicule ferroviaire 1, ni devoir démonter le caisson haute tension 1B, comme l'exigerait un dispositif de commutation à structure non modulaire.

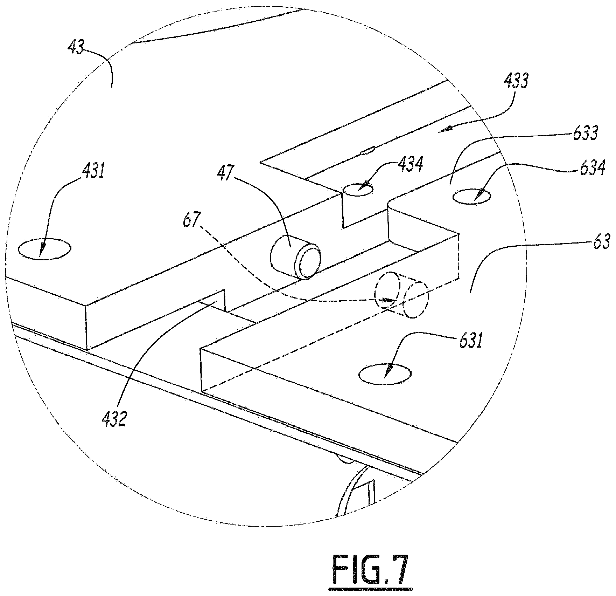

À titre de variante, la figure 7 illustre une autre forme de réalisation des moyens d'assemblage, à savoir un logement 433 et une protubérance 633 complémentaires et ayant une section rectangulaire en projection dans le plan défini par les axes X et Y, combinés à un pion de centrage 47 et un alésage 67 complémentaires, par exemple cylindriques et orientés selon l'axe X. La combinaison des logement 433 et protubérance 633 de section rectangulaire avec le pion de centrage 47 et l'alésage 67 est globalement plus facile à produire par usinage que les moyens d'assemblage montrés en figure 4, présentant les faces obliques 433B et 633B.

Les rails 81 et 82 décrits jusqu'ici sont un exemple de réalisation de moyens de guidage permettant de guider les supports 42 et 62 l'un par rapport à l'autre entre les configurations assemblée et désassemblée, le guidage en résultant pouvant avantageusement être en translation selon l'axe X, comme avec les rails 81 et 82, mais peuvent aussi être selon d'autres cinématiques possibles. Ainsi, des systèmes utilisant des glissières, des cornières, ou d'autres solutions techniques sont envisageables en tant que moyens de guidage, alternatifs ou complémentaires aux rails 81 et 82.

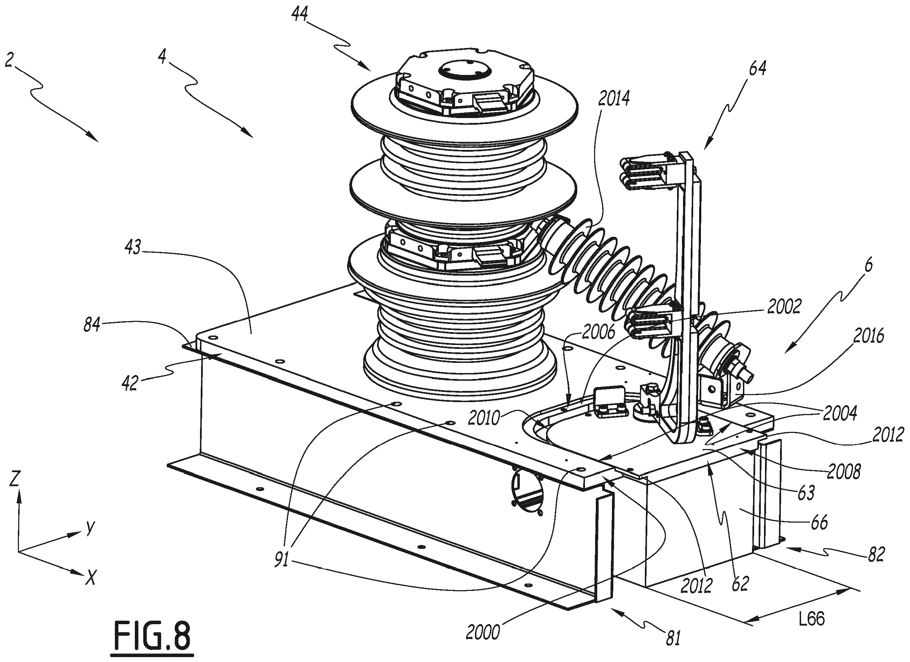

Un deuxième mode de réalisation est représenté en figure 8. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

Dans le premier mode de réalisation, les moyens de guidage sont réalisés au moyen des rebords 84 des rails 81 et 82, qui coopèrent avec des formes complémentaires ménagées sur les faces 43B et 63B des plaques 43 et 63. Un exemple de réalisation d'une forme complémentaire est le rebord 432, visible sur les figures 4 et 7. Dans le deuxième mode de réalisation, les moyens de guidage sont ménagés dans les premier et deuxième supports 42 et 62, en particulier dans les plaques 43 et 63 des premier et deuxième supports 42 et 62.

Dans l'exemple illustré sur la figure 8, la plaque 43 se prolonge dans la direction de l'axe X et recouvre l'essentiel des rebords 84 des rails 81 et 82. Une découpe avec un contour en forme de U, dite découpe en U, est ménagée selon l'axe Z au travers de la plaque 43, la découpe en U débouchant sur une face avant 2000 de la plaque 43, la face avant 2000 étant ici orthogonale à l'axe X. La découpe en U présente un fond 2002, relié par des arrondis à deux portions latérales 2004. Les deux portions latérales 2004 sont parallèles l'une à l'autre.

Dans l'exemple illustré, les portions latérales 2004 sont parallèles à l'axe X, tandis que le fond 2002 est orthogonal à l'axe X.

La découpe en U présente sur son contour un profil ménageant un logement 2006, de forme analogue à la forme du logement 433 du premier mode de réalisation. Ainsi le logement 2006 comprend des portions correspondant au fond 2002 et aux portions latérales 2004 latérales.

La plaque 63 présente une forme complémentaire de la découpe en U de la plaque 43. Plus précisément, la plaque 63 présente une face 2008, qui est orientée à l'opposé de la plaque 43, tandis que la plaque 63 présente, du côté de la plaque 43, un contour complémentaire 2010 de la découpe en U. En particulier, le contour complémentaire 2010 comprend une portion complémentaire du fond 2002, et des portions complémentaires des portions latérales 2004.

Une protubérance 2012 est ménagée le long du contour complémentaire 2010, de manière à coopérer avec le logement 2006 ménagé le long de la découpe en U. Dans l'exemple de la figure 8, la protubérance 2012 présente un profil analogue à la celui de la protubérance 633 du premier mode de réalisation.

Dans la configuration du dispositif 2 représentée sur la figure 8, le deuxième module 6 est supporté par les portions latérales 2004 du premier module 4, plus précisément des portions de la protubérance 2012 sont reçues dans des portions du logement 2006 correspondant aux portions latérales 2004. Les portions latérales 2004 étant parallèles entre elles, on comprend que le deuxième module 6 peut être déplacé par un opérateur en translation par rapport au premier module 4 suivant une direction parallèle à l'axe X, par glissement du deuxième module 6 sur les portions latérales 2004. Les portions latérales 2004 sont ainsi un exemple de réalisation de moyens de guidage ménagés dans les premier et deuxième supports 42 et 62, le logement 2006 et la protubérance 2012 étant des formes complémentaires propres à guider en translation les premier et deuxième supports 42 et 62.

À partir de la configuration de la figure 8, si un opérateur rapproche l'un de l'autre les premier et le deuxième modules 4 et 6, le contour complémentaire 2010 arrive au contact du fond 2002 de la découpe en U, et les premier et deuxième supports 42 et 62 sont alors dans la configuration assemblée.

On comprend que tant que le contour complémentaire 2010 n'est pas au contact du fond 2002 mais est seulement en contact des portions latérales 2004, les premier et deuxième supports 42 et 62 sont en configuration désassemblée, le deuxième module 6 pouvant être déplacé en translation, guidé par les portions latérales 2004, ou bien désengagé des portions latérales 2004.

La protubérance 2012 coopère avec la portion du logement 2006 correspondant au fond 2002, de manière à assembler de manière réversible les premier et deuxième supports 42 et 62 l'un à l'autre, d'une manière analogue à celle dont la protubérance 633 et le logement 433 du premier mode coopèrent ensemble. Autrement dit, le logement 2006 et la protubérance 2012 du deuxième mode de réalisation constituent un exemple de moyen d'assemblage mécanique réversible du premier support 42 au deuxième support 62.

Avantageusement, en configuration assemblée des premier et deuxième modules 4 et 6, la plaque 63 est reçue dans la découpe en U de la plaque 43 et la face 2008 de la plaque 63 est affleurante avec la face avant 2000 de la plaque 43.

La forme en U, qui combine les fonctions de moyen de guidage et de moyen d'assemblage, est relativement simple à usiner, notamment en comparaison des formes des logement 433 et protubérance 633 du premier mode, ou des rebords, analogues au rebord 432, ménagés sur les faces 43B et 63B des plaques 43 et 63.

La plaque 43, qui s'étend sur toute la longueur des rails 81 et 82, est fixée sur toute la longueur des rails 81 et 82 au moyen des moyens de fixation 91, ce qui offre un ensemble plus rigide que dans le premier mode de réalisation. Dans le deuxième mode de réalisation, le deuxième module 62 n'est pas fixé aux rails 81 ou 82 comme dans le premier mode, mais est assemblé au premier module 42 grâce aux moyens d'assemblage.

Dans le deuxième mode de réalisation, le dispositif de commutation 4 comprend, outre le disjoncteur 44 et le composant électrique 64, un troisième composant électrique 2014. Dans l'exemple de la figure 8, le troisième composant 2014 fait partie du premier module 4 et relie une portion intermédiaire du disjoncteur 44 à une bride 2016 fixée sur la face 43A de la plaque 43. Le troisième composant 2014 est par exemple un sectionneur de mise à terre ou un pare-foudre. Le composant 2016 n'est pas nécessaire au deuxième mode de réalisation, mais est une illustration de la variété des configurations possibles pour le dispositif de commutation électrique 2 modulaire, comprenant un disjoncteur 44, accompagné d'un ou plusieurs composants électriques, montés sur le premier et/ou deuxième modules 4 et/ou 6.

Selon une variante non ici représentée, le troisième composant électrique 2014 fait partie d'un troisième module du dispositif de commutation électrique 2. Ce troisième module a une structure selon l'invention similaire à celle des premier et deuxième modules 4 et 6, à savoir comprenant un troisième support, un troisième composant électrique placé sur l'une des faces principales de ce troisième support, et un troisième organe de commande placé sur l'autre face principale du troisième support.

Les termes premier, deuxième et troisième modules servent à nommer les modules constituant le dispositif de commutation électrique, mais ne préjugent pas de l'ordre d'engagement des trois modules sur les moyens de guidage, ni de leur positionnement relatif en configuration assemblée.

Dans la configuration assemblée, l'un des trois modules se retrouve entre les deux autres dans une position intercalaire ; les deux faces latérales selon l'axe X du support de ce module intercalaire sont munies de moyens d'assemblage compatibles avec les moyens d'assemblage portés par les supports des deux autres modules.

Toute caractéristique de l'un des modes de réalisation ou variante décrite cidessus, peut être mise en oeuvre dans les autres modes de réalisation et variantes décrits.

## Revendications

1. Dispositif de commutation électrique (2), embarqué dans un véhicule ferroviaire (1), comprenant :
- un premier module (4) comportant un premier support (42) sur lequel est monté un disjoncteur (44), et
au moins un deuxième module (6) avec un composant électrique (64) propre à être associé au disjoncteur, chaque deuxième module (6) comprenant un organe de commande (66) respectif pour commander le composant électrique (64) correspondant,
**caractérisé**
- **en ce que** le deuxième module comporte un deuxième support (62), qui est distinct du premier support et sur lequel est monté le composant électrique (64),
- **en ce que** dispositif de commutation électrique (2) comprend des moyens de guidage (81, 82 ; 2004) adaptés pour guider l'un par rapport à l'autre les premier et deuxième supports (42 et 62) entre une configuration désassemblée, dans laquelle au moins l'un des premier et deuxième modules est désengageable des moyens de guidage indépendamment de l'autre, et une configuration assemblée, dans laquelle le disjoncteur et le composant électrique sont propres à être connectés l'un à l'autre,
- **en ce qu'**en configuration assemblée, le disjoncteur et le composant électrique sont dans un positionnement relatif de connexion et sont propres à être connectés ou déconnectés électriquement au moyen de l'organe de commande (66) correspondant.

2. Dispositif selon la revendication 1, **caractérisé en ce que** les moyens de guidage (81, 82 ; 2004) sont adaptés pour guider en translation selon un axe (X) les premier et deuxième supports (42 et 62) entre leur configuration assemblée et leur configuration désassemblée.

3. Dispositif selon la revendication 2, **caractérisé en ce que** les moyens de guidage (2004) sont ménagés dans les premier et deuxième supports (42, 62), les moyens de guidage comprenant des formes complémentaires (2006 ; 2012) propres à guider en translation les premier et deuxième supports (42 et 62) entre leur configuration assemblée et leur configuration désassemblée.

4. Dispositif selon l'une quelconque des revendications 1 à 3, **caractérisé en ce que** les premier et deuxième supports (42 et 62) comportent des moyens d'assemblage mécanique (433 et 633 ; 2006, 2012) qui sont adaptés pour assembler de manière réversible les premier et deuxième supports l'un à l'autre dans la configuration assemblée.

5. Dispositif selon la revendication 4, **caractérisé en ce que** les moyens d'assemblage comprennent une première partie (433 ; 2006) portée par le premier support (42) et une deuxième partie (633 ; 2012) portée par le deuxième support (62), les première et deuxième parties coopérant par complémentarité de formes lorsque les premier et deuxième supports sont dans la configuration assemblée.

6. Dispositif selon la revendication 5, **caractérisé en ce que** l'une des première et deuxième parties (433, 633 ; 2006, 2012) des moyens d'assemblage est un élément mâle, **en ce que** l'autre des première et deuxième parties des moyens d'assemblage est un élément femelle, et **en ce que** l'élément mâle pénètre dans l'élément femelle lorsque les premier et deuxième supports (42 et 62) passent de la configuration désassemblée à la configuration assemblée.

7. Dispositif selon l'une quelconque des revendications 1 à 6, **caractérisé en ce que** le dispositif comporte des moyens de fixation (91 et 92 ; 91) adaptés pour fixer de manière réversible les premier et deuxième supports (42 et 62 ; 42) aux moyens de guidage (81 et 82 ; 81) lorsque les premier et deuxième supports sont dans la configuration assemblée.

8. Dispositif selon l'une quelconque des revendications 1 à 7, **caractérisé en ce que** le premier support (42) est une plaque (43) ayant une première face (43A) sur laquelle est monté le disjoncteur (44) et une seconde face (43B), qui est opposée à la première face de la plaque du premier support et sur laquelle est monté un organe de commande (46) pour commander le disjoncteur, **en ce que** le deuxième support (62) est une plaque (63) ayant une première face (63A) sur laquelle est monté le composant électrique (64) et une seconde face (63B), qui est opposée à la première face de la plaque du deuxième support et sur laquelle est monté un organe de commande (66) pour commander le composant électrique, et **en ce que** la première face de la plaque du premier support et la première face de la plaque du deuxième support sont tournées du même côté lorsque les premier et deuxième supports sont dans la configuration assemblée.

9. Dispositif selon la revendication 8, **caractérisé en ce que** la première face (43A) de la plaque (43) du premier support (42) et la première face (63A) de la plaque (63) du deuxième support (62) sont affleurantes lorsque les premier et deuxième supports sont dans la configuration assemblée.

10. Dispositif selon l'une quelconque des revendications 1 à 9, **caractérisé en ce que** le disjoncteur (44) comporte un premier organe de connexion (441), **en ce que** le composant électrique (64) comporte un deuxième organe de connexion (644), et **en ce que** les premier et deuxième organes de connexion sont propres à être connectés électriquement l'un à l'autre lorsque les premier et deuxième supports (41 et 42) sont dans la configuration assemblée.

11. Dispositif selon la revendication 10 prise en combinaison avec l'une des revendications 8 ou 9, **caractérisé en ce que** les premier et deuxième organes de connexion (441 et 644) se connectent l'un à l'autre sous l'action d'au moins un des organes de commande (46 et 66) lorsque les premier et deuxième supports (42 et 62) sont en configuration assemblée.

12. Véhicule ferroviaire (1), comportant :
un couloir (1C),
un caisson haute tension (1B), accessible par le couloir, et
un dispositif de commutation électrique (2), qui est conforme à l'une quelconque des revendications 1 à 11 et qui est installé dans le caisson haute tension lorsque les premier et deuxième supports (42 et 62) sont dans la configuration assemblée, au moins l'un des premier et deuxième modules (4 et 6) du dispositif étant dimensionné pour être déplacé dans le couloir lorsque les premier et deuxième supports sont dans la configuration désassemblée.

## Patentansprüche

1. Elektrische Schaltvorrichtung (2) an Bord eines Schienenfahrzeugs (1), umfassend:
- ein erstes Modul (4), umfassend einen ersten Träger (42), auf dem ein Leistungsschalter (44) montiert ist, und
mindestens ein zweites Modul (6) mit einer elektrischen Komponente (64), die geeignet ist, um mit dem Leistungsschalter assoziiert zu werden, jedes zweite Modul (6) umfassend ein jeweiliges Bedienorgan (66) zum Steuern der entsprechenden elektrischen Komponente (64),
**dadurch gekennzeichnet,**
- **dass** das zweite Modul einen zweiten Träger (62) umfasst, der von dem ersten Träger verschieden ist und auf dem die elektrische Komponente (64) montiert ist,
- **dass** die elektrische Schaltvorrichtung (2) Führungseinrichtungen (81, 82; 2004) umfasst, die geeignet sind, um den ersten und den zweiten Träger (42 und 62) in Bezug aufeinander zwischen einer zerlegten Konfiguration, in der mindestens eines von dem ersten und dem zweiten Modul unabhängig von dem anderen von den Führungseinrichtungen gelöst werden kann, und einer zusammengebauten Konfiguration, in der der Leistungsschalter und die elektrische Komponente geeignet sind, um miteinander verbunden zu werden, zu führen,
- **dass** der Leistungsschalter und die elektrische Komponente in der zusammengebauten Konfiguration in einer relativen Verbindungsposition sind und geeignet sind, um mittels des entsprechenden Bedienorgans (66) elektrisch verbunden oder getrennt zu werden.

2. Vorrichtung nach Anspruch 1, **dadurch gekennzeichnet, dass** die Führungseinrichtungen (81, 82; 2004) geeignet sind, um den ersten und den zweiten Träger (42 und 62) zwischen ihrer zusammengebauten und ihrer zerlegten Konfiguration translatorisch entlang einer Achse (X) zu führen.

3. Vorrichtung nach Anspruch 2, **dadurch gekennzeichnet, dass** die Führungseinrichtungen (2004) in dem ersten und dem zweiten Träger (42, 62) vorgesehen sind, die Führungseinrichtungen umfassend komplementäre Formen (2006; 2012), die geeignet sind, um den ersten und den zweiten Träger (42 und 62) zwischen ihrer zusammengebauten und ihrer zerlegten Konfiguration translatorisch zu führen.

4. Vorrichtung nach einem der Ansprüche 1 bis 3, **dadurch gekennzeichnet, dass** der erste und der zweite Träger (42 und 62) mechanische Zusammenbaueinrichtungen (433 und 633; 2006, 2012) umfassen, die geeignet sind, um den ersten und den zweiten Träger in der zusammengebauten Konfiguration reversibel miteinander zu verbinden.

5. Vorrichtung nach Anspruch 4, **dadurch gekennzeichnet, dass** die Zusammenbaueinrichtungen einen ersten Teil (433; 2006), der von dem ersten Träger (42) getragen wird, und einen zweiten Teil (633; 2012), der von dem zweiten Träger (62) getragen wird, umfassen, wobei der erste und der zweite Teil formschlüssig zusammenwirken, wenn der erste und der zweite Träger in der zusammengebauten Konfiguration sind.

6. Vorrichtung nach Anspruch 5, **dadurch gekennzeichnet, dass** einer von dem ersten und dem zweiten Teil (433, 633; 2006, 2012) der Zusammenbaueinrichtungen ein Steckelement ist, dass der andere von dem ersten und dem zweiten Teil der Zusammenbaueinrichtungen ein Buchsenelement ist, und dass das Steckelement in das Buchsenelement eindringt, wenn der erste und der zweite Träger (42 und 62) von der zerlegten Konfiguration in die zusammengebaute Konfiguration übergehen.

7. Vorrichtung nach einem der Ansprüche 1 bis 6, **dadurch gekennzeichnet, dass** die Vorrichtung Befestigungseinrichtungen (91 und 92; 91) umfasst, die angepasst sind, um den ersten und den zweiten Träger (42 und 62; 42) an den Führungseinrichtungen (81 und 82; 81) reversibel zu befestigen, wenn der erste und der zweite Träger in der zusammengebauten Konfiguration sind.

8. Vorrichtung nach einem der Ansprüche 1 bis 7, **dadurch gekennzeichnet, dass** der erste Träger (42) eine Platte (43) ist, die eine erste Seite (43A), auf der der Leistungsschalter (44) montiert ist, und eine zweite Seite (43B), die der ersten Seite der Platte des ersten Trägers gegenüber ist, aufweist und auf der ein Bedienorgan (46) zum Bedienen des Leistungsschalters montiert ist, dass der zweite Träger (62) eine Platte (63) ist, die eine erste Seite (63A), auf der die elektrische Komponente (64) montiert ist, und eine zweiten Seite (63B), die der ersten Seite der Platte des zweiten Trägers gegenüber ist und auf der ein Bedienorgan (66) zum Bedienen der elektrischen Komponente montiert ist, aufweist und dass die erste Seite der Platte des ersten Trägers und die erste Seite der Platte des zweiten Trägers auf die gleiche Seite zeigen, wenn der erste und der zweite Träger in der zusammengebauten Konfiguration sind.

9. Vorrichtung nach Anspruch 8, **dadurch gekennzeichnet, dass** die erste Seite (43A) der Platte (43) des ersten Trägers (42) und die erste Seite (63A) der Platte (63) des zweiten Trägers (62) bündig sind, wenn der erste und der zweite Träger in der zusammengebauten Konfiguration sind.

10. Vorrichtung nach einem der Ansprüche 1 bis 9, **dadurch gekennzeichnet, dass** der Leistungsschalter (44) ein erstes Verbindungsorgan (441) umfasst, dass die elektrische Komponente (64) ein zweites Verbindungsorgan (644) aufweist, und dass das erste und das zweite Verbindungsorgan geeignet sind, um elektrisch miteinander verbunden zu werden, wenn der erste und der zweite Träger (41 und 42) in der zusammengebauten Konfiguration befinden.

11. Vorrichtung nach Anspruch 10 in Kombination mit einem der Ansprüche 8 oder 9, **dadurch gekennzeichnet, dass** das erste und das zweite Verbindungsorgan (441 und 644) unter der Wirkung von mindestens einem von den Bedienorganen (46 und 66) miteinander verbunden werden, wenn der erste und der zweite Träger (42 und 62) in der zusammengebauten Konfiguration sind.

12. Schienenfahrzeug (1), umfassend:
einen Gang (1C),
einen Hochspannungskasten (1B), der von dem Gang aus zugänglich ist, und
eine elektrische Schaltvorrichtung (2), die einem der Ansprüche 1 bis 11 entspricht und in dem Hochspannungskasten installiert ist, wenn der erste und der zweite Träger (42 und 62) in der zusammengebauten Konfiguration sind, wobei mindestens eines von dem ersten und dem zweiten Modul (4 und 6) der Vorrichtung bemessen ist, dass es in den Gang bewegt werden kann, wenn der erste und der zweite Träger in der zerlegten Konfiguration sind.

## Claims

1. An electric switching device (2), embarked in a railway vehicle (1), comprising:
- a first module (4) including a first support (42) on which a circuit breaker (44) is mounted, and
- at least one second module (6) with an electric component (64) is mounted that is able to be associated with the circuit breaker,
each second module (6) comprising a respective control member (66) designed to control the corresponding electric component (64),
**characterized**:
- **in that** the second module (6) comprises a second support (62), which is separate from the first support (42) and on which the electric component (64) is mounted,
- **in that** electric switching device (2) comprises guiding means (81, 82; 2004) that are able to guide the first and second supports (42 and 62) relative to one another between a disassembled configuration, in which at least one of the first and second modules is disengageable from the guide means independently of the other, and an assembled configuration, in which the circuit breaker and the electric component are able to be connected to one another,
- **in that** in the assembled configuration, the circuit breaker and the electric component are in a relative connection position and are able to be electrically connected or disconnected by means of the corresponding control member (66).

2. The device according to claim 1, **characterized in that** the guiding means (81, 82; 2004) are configured to guide the translation, along an axis (X), of the first and second supports (42 and 62) between their assembled configuration and their disassembled configuration.

3. The device according to claim 2, **characterized in that** the guiding means (2004) are arranged in the first and second supports (42, 62), the guiding means comprising complementary shapes (2006; 2012) able to guide the translation of the first and second supports (42 and 62) between their assembled configuration and their disassembled configuration.

4. The device according to any one of claims 1 to 3, **characterized in that** the first and second supports (42 and 62) include mechanical assembly means (433 and 633; 2006, 2012) that are configured to reversibly assemble the first and second supports to one another in the assembled configuration.

5. The device according to claim 4, **characterized in that** the assembly means comprise a first part (433; 2006) borne by the first support (42) and a second part (633; 2012) borne by the second support (62), the first and second parts cooperating by shape matching when the first and second supports are in the assembled configuration.

6. The device according to claim 5, **characterized in that** one of the first and second parts (433, 633; 2006, 2012) of the assembly means is a male element, **in that** the other of the first and second parts of the assembly means is a female element, and **in that** the male element penetrates the female element when the first and second supports (42 and 62) go from the disassembled configuration to the assembled configuration.

7. The device according to any one of claims 1 to 6, **characterized in that** the device includes fastening means (91 and 92; 91) configured to fasten the first and second supports (42 and 62; 42) reversibly to the guide means (81 and 82; 81) when the first and second supports are in the assembled configuration.

8. The device according to any one of claims 1 to 7, **characterized in that** the first support (42) is a plate (43) having a first face (43A) on which the circuit breaker (44) is mounted and a second face (43B), which is opposite the first face of the plate of the first support and on which a control member (46) is mounted to control the circuit breaker, **in that** the second support (62) is a plate (63) having a first face (63A) on which the electric component (64) is mounted and a second face (63B), which is opposite the first face of the plate of the second support and on which the control member (66) is mounted to control the electric component, and **in that** the first face of the plate of the first support and the first face of the plate of the second support face the same side when the first and second supports are in the assembled configuration.

9. The device according to claim 8, **characterized in that** the first face (43A) of the plate (43) of the first support (42) and the first face (63A) of the plate (63) of the second support (62) are flush when the first and second supports are in the assembled configuration.

10. The device according to any one of claims 1 to 9, **characterized in that** the circuit breaker (44) includes a first connection member (441), **in that** the electric component (64) includes a second connection member (644), and **in that** the first and second connection members are able to be electrically connected to one another when the first and second supports (41 and 42) are in the assembled configuration.

11. The device according to claim 10 combined with one of claims 8 or 9, **characterized in that** the first and second connecting members (441 and 644) connect to one another under the action of at least one of the control members (46 and 66) when the first and second supports (42 and 62) are in the assembled configuration.

12. A railway vehicle (1), including:
an aisle (1C),
a high-voltage box (1B), accessible via the aisle, and
an electric switching device (2), which is according to any one of claims 1 to 11 and which is installed in the high-voltage box when the first and second supports (42 and 62) are in the assembled configuration, at least one of the first and second modules (4 and 6) of the device being dimensioned to be moved in the aisle when the first and second supports are in the disassembled configuration.
